# FASCICULE DE BREVET EUROPEEN

(11) **EP 4 433 718 B1**
(45) Date de publication et mention de la délivrance du brevet: **05.11.2025**
(21) Numéro de dépôt: 22818098.0
(22) Date de dépôt: 14.11.2022
(51) Int. Cl.: F16C 33/30, F16C 33/36, F16C 33/58, F16C 19/16, F16C 19/20, F16C 19/36, F16C 19/46, F16C 33/372, F16C 33/46, F16C 39/02

(54) **PALIER DE ROULEMENT MECANIQUE**
MECHANISCHES WÄLZLAGER
MECHANICAL ROLLER BEARING

(30) Priorité: 16.11.2021 FR 2112091
(43) Date de publication de la demande: 25.09.2024
(73) Titulaire: Safran Aircraft Engines, 75015 Paris (FR)
(72) Inventeur: SCHWEITZER, Laurent, 77550 MOISSY CRAMAYEL (FR); GAUTIER, Mathias, 77550 MOISSY CRAMAYEL (FR)
(74) Mandataire: Ernest Gutmann - Yves Plasseraud S.A.S.
(86) Numéro de dépôt international: PCT/FR2022/000103
(87) Numéro de publication internationale: WO 2023/089247

(56) Documents cités:
- EP-A1- 3 382 222
- WO-A1-93/04293
- DE-A1- 19 959 499
- US-A- 2 071 797
- US-B1- 6 471 408

## Description

### Domaine technique de l'invention

La présente invention concerne les paliers à roulement et plus particulièrement les paliers à roulement tournant à faible vitesse amenés à subir des charges occasionnelles extrêmes.

### Etat de la technique antérieure

Les paliers à roulement sont généralement utilisés pour assurer la mise en position axiale et radiale précises d'arbres solidaires de pièces devant être orientées ou mis en rotation lente.

Ces paliers à roulement sont constitués d'une bague de roulement intérieure présentant une piste de roulement, pouvant ou non être divisée en deux bagues portant chacune une demi-piste ; d'une bague de roulement extérieure présentant une piste de roulement, pouvant être ou non divisée en deux bagues portant chacune une demi-piste; d'éléments roulants pouvant être des billes ou des rouleaux et éventuellement d'un ou plusieurs dispositifs séparateurs d'éléments roulants visant à assurer la bonne répartition circonférentielle de ces derniers dans le roulement. Les éléments roulants peuvent être des billes, des rouleaux cylindriques, coniques ou en tonneaux.

Les roulements mettent en jeu des géométries de contacts hertziens de type bille/pistes en portions de tores, rouleau cylindrique/ pistes cylindriques, rouleau conique / pistes coniques ou rouleau tonneau / pistes sphérique et torique. Ces géométries ont tendance à concentrer les efforts de contact sur des surfaces très réduites.

Lors de chargement très important à une position donnée ou à très faible vitesse, les pressions de contact entre les éléments roulants et les pistes peuvent dépasser la limite élastique des matériaux des pistes ou des éléments roulants, altérant leurs géométries par matage. Ce matage détériore le roulement en créant des points durs voire un jeu. On appelle cela l'effet de Brinell ou brinelling.

Afin d'éviter ce type de détérioration, les paliers de roulement sont dimensionnés pour tenir compte des chargements extrêmes, même si ceux-ci sont rares. De nombreux paliers de roulement sont donc surdimensionnés dans la très grande majorité de leur cycle de vie.

Ces paliers de roulement surdimensionnés sont lourds, encombrants et coûteux.

Des solutions alternatives sont proposées dans les documents EP 3 382 222 A1 et US 2 071 797 A permettant à des paliers de résister lors de chocs or de rupture d'éléments roulants.

### Présentation de l'invention

Un but de la présente invention est de proposer un ensemble de roulement résistant mieux à des surcharges occasionnelles.

Un autre but de la présente invention est de proposer un ensemble de roulement ne présentant pas de point dur ou de jeu après un évènement occasionnel de chargement extrême.

Un autre but de la présente invention est de proposer un ensemble de roulement moins lourd tout en étant capable de supporter des charges importantes.

Un autre but de la présente invention est de proposer un ensemble de roulement moins encombrant et capable de supporter des charges importantes.

Un autre but de la présente invention est de proposer un ensemble de roulement moins coûteux.

### Résumé de l'invention

La présente invention a pour objet un palier de roulement mécanique selon la revendication 1, comprenant :
- deux bagues présentant chacune une piste de roulement,
- des éléments roulants agencés entre les bagues, les éléments roulants étant aptes à rouler contre une partie des pistes de roulement, les éléments roulants étant réalisés dans un matériau défini,
- une pluralité de blocs intercalaires agencés entre les bagues, les blocs intercalaires étant réalisés dans un matériau ayant une raideur supérieure à la raideur du matériau des éléments roulants au moins dans des directions normales aux pistes de roulement, et dans lequel, lorsque le palier est soumis à une charge inférieure à une charge seuil, les blocs intercalaires présentent une dimension inférieure aux éléments roulants dans des directions normales aux pistes de roulement, les bagues ayant une raideur supérieure aux éléments roulants ; les blocs intercalaires comportant des faces d'appui situées en regard des pistes de roulement, lesdites faces d'appui des blocs intercalaires ayant une forme complémentaire à la forme des pistes de roulement.

Avantageusement, le palier selon l'invention permet de combiner les avantages d'un palier à roulement et les avantages d'un palier lisse, le premier assurant la performance en fonctionnement normal tout en restant assez souple pour se déformer sans dommage jusqu'à mise en contact du second, plus raide et résistant à la surcharge.

Avantageusement, les blocs intercalaires permettent de remplir la fonction de séparation et bonne répartition angulaire des éléments roulants. Les blocs intercalaires peuvent se retrouver eux-mêmes positionnés par une cage séparatrice d'éléments roulants.

Les caractéristiques exposées dans les paragraphes suivants peuvent, optionnellement, être mises en œuvre. Elles peuvent être mises en œuvre indépendamment les unes des autres ou en combinaison les unes avec les autres :
- Les éléments roulants sont fabriqués dans un matériau ayant une raideur suffisante pour autoriser la déformation des éléments roulants dans leur domaine de déformation élastique au moins jusqu'à ce que lesdits blocs intercalaires soient en contact des pistes de roulement, lorsque le palier est soumis à une charge supérieure à ladite charge seuil.
- Les blocs intercalaires présentent des arêtes arrondies.
- Les arêtes arrondies présentent une courbure à variation progressives formée par une succession de rayons fixes tangents ou une fonction continue dérivable.
- Les bagues ont une raideur supérieure aux éléments roulants.
- Les blocs intercalaires et les éléments roulants sont disposées alternativement les uns après les autres.
- Les blocs intercalaires et les bagues sont réalisés dans un matériau parmi la céramique et l'acier, et dans lequel les éléments roulants sont réalisés dans un alliage de Nickel-Titane.
- Les blocs intercalaires et les bagues sont réalisés en céramique et dans lequel les éléments roulants sont réalisés en acier.
- Le palier comporte une cage de roulement comprenant des premières alvéoles et des deuxièmes alvéoles, les premières alvéoles ayant une forme différente de la forme des deuxièmes alvéoles, les premières alvéoles contenant les éléments roulants et les deuxièmes alvéoles contenant les blocs intercalaires.
- Les blocs intercalaires sont solidarisés de façon rigide aux deuxièmes alvéoles.
- Les blocs intercalaires sont montés libres dans les deuxièmes alvéoles, un jeu étant aménagé dans les deuxièmes alvéoles autour des blocs intercalaires.
- Les blocs intercalaires sont solidarisés de façon souple aux deuxièmes alvéoles.
- Les éléments roulants présentent une forme sphérique et dans lequel les blocs intercalaires présentent en coupe une forme de carré ou de losange dont les angles obtus sont arrondis ayant deux sommets opposés de forme arrondies, ladite coupe étant réalisée selon un plan radial.
- Les éléments roulants présentent une forme de rouleau conique, et dans lequel les faces d'appui des blocs intercalaires présentent une forme tronconique.
- Les éléments roulants présentent une forme de rouleau cylindrique ou d'aiguille, et dans lequel les faces d'appui des blocs intercalaires présentent une forme cylindrique.
- Les éléments roulants présentent une forme de rouleau tonneau face à une piste extérieure en portion de sphère, et dans lequel les faces d'appui des blocs intercalaires présentent une forme en portion de tore face à la piste intérieure et en portion de sphère face à la piste extérieure.

L'invention concerne un module de turbomachine comprenant un arbre rotatif d'axe longitudinal X-X ; un palier de roulement mécanique de guidage en rotation de l'arbre rotatif autour de l'axe longitudinal X-X ; ledit palier étant conformé selon les caractéristiques mentionnées ci-dessus.

L'invention concerne également une turbomachine comprenant un module de turbomachine conformé selon les caractéristiques mentionnées ci-dessus.

La turbomachine comprend en outre un ensemble de pièces en rotation lente ou à orienter selon un axe lui-même en rotation autour d'un axe d'arbre principal tournant, lesdites pièces subissant un champ d'accélération centrifuge.

### Brève description des figures

[Fig. 1] est une vue en coupe d'un ensemble de roulement comprenant un palier de roulement selon un premier mode de réalisation de l'invention ; la coupe étant réalisée dans un plan radial à l'axe de rotation du palier ;
[Fig. 2] est une vue en perspective de côté de l'ensemble de roulement illustré sur la figure 1 sans bague externe et sans carter ;
[Fig. 3] est une vue de dessus de l'ensemble de roulement illustré sur la figure 1 ;
[Fig. 4] est une vue en perspective de côté d'un palier selon un deuxième mode de réalisation monté autour d'un arbre ;
[Fig. 5] est une vue en coupe d'un ensemble de roulement comprenant un palier de roulement selon un troisième mode de réalisation de l'invention ; la coupe étant formée dans un plan radial à l'axe de rotation du palier ;
[Fig. 6] est une vue en perspective de côté de l'ensemble de roulement illustré sur la figure 5 sans bague externe et sans carter ;
[Fig. 7] est une vue de dessus de l'ensemble de roulement illustré sur la figure 5 ;
[Fig. 8] est un schéma de principe illustrant un premier exemple de courbure d'une face d'appui d'un bloc intercalaire ;
[Fig. 9] est un schéma de principe illustrant un deuxième exemple de courbure d'une face d'appui d'un bloc intercalaire ;
[Fig. 10] est une vue en coupe d'un ensemble de roulement comprenant une partie d'un palier de roulement selon un quatrième mode de réalisation de l'invention ; la coupe étant formée dans un plan radial à l'axe de rotation du palier ;
[Fig. 11] est une vue en perspective de côté de l'ensemble de roulement illustré sur la figure 10 sans bague externe ;
[Fig. 12] une vue de dessus de l'ensemble de roulement illustré sur la figure 10 ;
[Fig. 13] une vue en perspective de l'ensemble de roulement illustré sur la figure 10 et comprenant en outre une cage de roulement.

### Description détaillée de l'invention

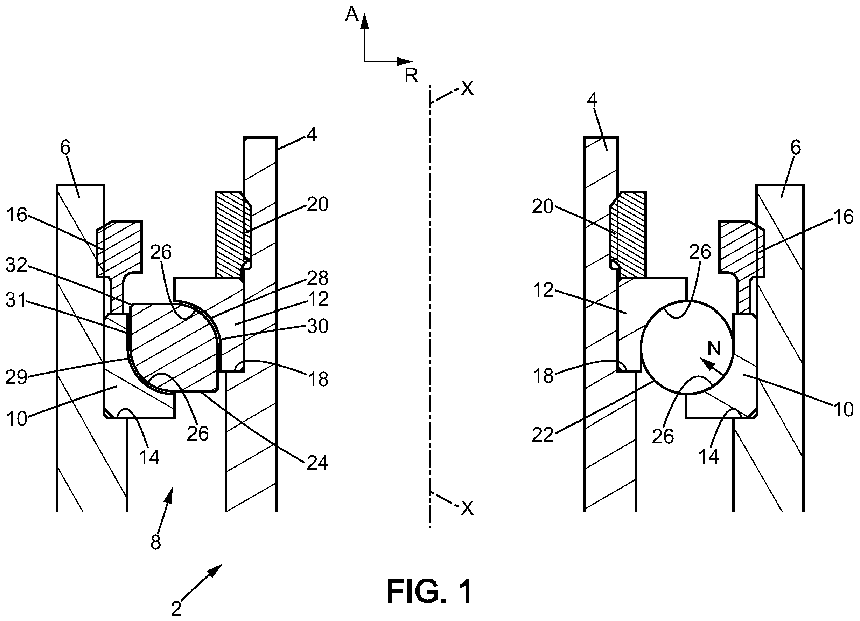

En référence à la figure 1, l'ensemble de roulement 2 comprend un arbre 4 ayant un axe de rotation X-X s'étendant selon une direction axiale A, un moyeu 6 agencé autour de l'arbre et un palier 8 monté entre l'arbre et le moyeu.

Le palier 8 comprend une bague externe 10 serrée contre le moyeu, une bague interne 12 serrée contre l'arbre, des éléments roulants 22 et des blocs intercalaires 24 agencés entre la bague externe et la bague interne.

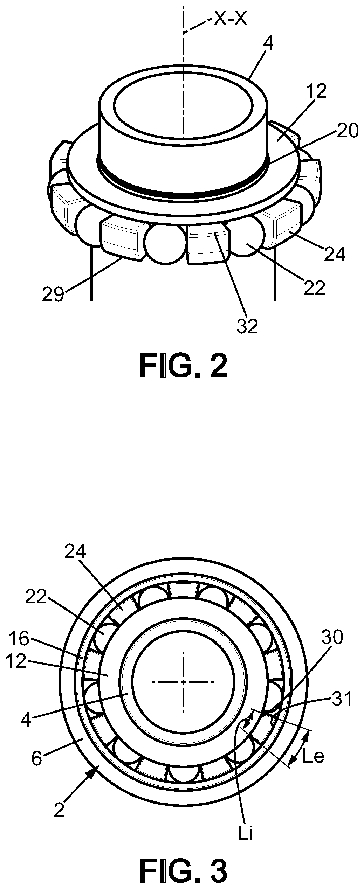

En référence à la figure 2, les éléments roulants 22 et les blocs intercalaires 24 sont répartis en cercle autour de l'axe de rotation X-X. Dans le mode de réalisation représenté sur cette figure, les éléments roulants et les blocs intercalaires sont disposées alternativement les uns après les autres. Alternativement, les blocs intercalaires et les éléments roulants peuvent être distribués différemment tel que par exemple une succession de deux éléments roulants et d'un bloc intercalaire. D'autres distributions peuvent être mises en œuvre.

En référence à la figure 1, la bague externe 10 est en butée contre un épaulement 14 prévu dans le moyeu. La bague externe est maintenue immobile en translation suivant la direction axiale A par un écrou 16 vissé dans le moyeu contre la bague externe. La bague interne 12 est en butée contre un épaulement 18 prévu dans l'arbre. Elle est maintenue immobile en translation suivant la direction axiale A par un écrou 20 vissé sur l'arbre contre la bague interne. La bague externe et la bague interne sont décalées selon la direction axiale A d'une distance fonction de la taille des éléments roulants.

La bague externe 10 et la bague interne 12 présente chacune une face dirigée vers les éléments roulants et les blocs intercalaires. Cette face est appelée piste de roulement 26.

Les blocs intercalaires 24 présentent une dimension inférieure aux éléments roulants 22 dans des directions normales N aux pistes de roulement. Ainsi, un jeu 30 est aménagé entre les blocs intercalaires 24 et les pistes de roulement 26.

Les blocs intercalaires 24 sont fabriqués dans un matériau ayant une raideur supérieure à la raideur du matériau dans lesquels les éléments roulants 22 sont fabriqués au moins dans des directions normales N aux pistes de roulement. De préférence, les blocs intercalaires sont fabriqués d'un seul tenant dans un seul matériau et ce matériau présente une raideur supérieure à la raideur du matériau utilisé pour la fabrication des éléments roulants.

Avantageusement, la bague externe 10 et la bague interne 12 sont également fabriqués dans un matériau ayant une raideur supérieure aux éléments roulants 22. Par exemple, les blocs intercalaires 24 et les bagues 10, 12 sont réalisés en céramique ou en acier et les éléments roulants 22 sont réalisés en un alliage super-élastique tel que par exemple du Nickel-Titane aussi appelé Nitinol.

Selon un autre exemple, les blocs intercalaires et les bagues sont réalisés en acier et les éléments roulants sont réalisés en céramique.

D'autres matériaux peuvent être utilisés à partir du moment où il existe une grande différence entre le module d'Young des éléments roulants et le module d'Young des blocs intercalaires et des bagues. Il n'est pas nécessaire que les bagues soient fabriquées dans le même matériau que les blocs intercalaires.

Les éléments roulants 22 sont fabriqués dans un matériau ayant une raideur suffisante pour autoriser leur déformation dans leur domaine de déformation élastique jusqu'à ce que lesdits blocs intercalaires soient en contact des pistes de roulement. Autrement dit, les éléments roulants sont aptes à se déformer dans leur domaine de déformation élastique sans entrer dans leur domaine de déformation plastique jusqu'à ce que les jeux 30 entre les blocs intercalaires et les pistes de roulement soient occupés, comme explicité ci-après. Les domaines de déformation élastique et plastiques des matériaux sont connus et ne seront pas décrits dans cette demande de brevet.

Les pistes de roulement 26 présentent une forme facilitant le déplacement des éléments roulants autour de l'axe de rotation X-X et selon les directions axiale A et radiale R. Dans le mode de réalisation représenté sur les figures 1 à 3, les éléments roulants 22 présentent une forme sphérique. Les pistes de roulement 26 présentent une forme en portion de tore.

Les blocs intercalaires 24 comportent des faces en regard des pistes de roulement. Ces faces sont appelées faces d'appui 28, 29 dans la présente demande de brevet. Les faces d'appui 28, 29 des blocs intercalaires ont une forme complémentaire à la forme des pistes de roulement 26. Ainsi, dans un plan de coupe radial, les blocs intercalaires présentent une forme de carré ayant deux sommets diagonalement opposés de forme arrondie formant les faces d'appui.

Dans ce mode de réalisation, les faces d'appui 28,29 du bloc intercalaire s'étendent en regard de l'ensemble de la surface des portions 30,31 de piste de roulement situées en regard de ce bloc intercalaire. Ainsi, en référence à la figure 3, la face d'appui 28 se superpose à l'ensemble de la portion 30 de piste de roulement de la bague interne 12 dans les directions axiale A et radiale R tout le long de la largeur intérieure Li du bloc intercalaire. De même, la face d'appui 29 opposée à la face d'appui 28 se superpose à l'ensemble de la portion 31 de piste de roulement de la bague externe 10 dans les directions axiale A et radiale R tout le long de la largeur extérieure Le du bloc intercalaire.

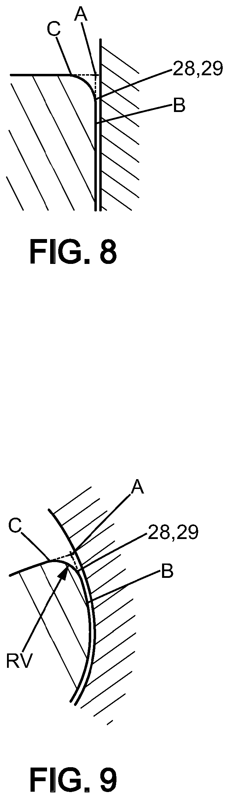

Les blocs intercalaires 22 présentent en outre des arêtes 32 cassées, dépouillées et arrondies graduellement pour éviter des surcharges aux bords. Pour cela, les rayons de courbure des faces d'appui 28, 29 évolue en fonction de la proximité de l'arête théorique qui existerait en l'absence de dépouille. Cette évolution des rayons de courbure peut être définie par une fonction mathématique tel que par exemple une fonction clothoïde, une fonction logarithmique, une fonction polynomiale, ou une fonction exponentielle. Le rayon de courbure diminue de façon continue et évolutive en s'approchant de l'arête théorique pour mieux éviter les concentrations de contraintes aux bords des contacts. La figure 8 illustre le principe de dépouille permettant d'éviter les surpressions de bords par rapport à une section de droite. La figure 9 illustre le principe de dépouille permettant d'éviter les surpressions de bords par rapport à une face arrondie. En référence à ces figures, au lieu de conformer les faces d'appui du bloc intercalaire jusqu'à une arête théorique illustré par un point référencé A, les faces d'appui 28, 29 suivent une courbure illustrée ici par une courbure définie entre les points B et C. Cette courbure ne doit pas présenter de rupture de tangence. La courbure peut varier par palier, par exemple par une succession plusieurs rayons constants, ou selon une fonction continue et dérivable. On peut le définir mathématiquement par un rayon fonction de l'abscisse curviligne depuis le point B ou le point C, ou bien encore en fonction d'une distance par rapport à la forme théorique sans dépouille aboutissant à l'arête théorique A.

En fonctionnement, lorsque la charge est inférieure à une charge seuil, le palier est utilisé dans un mode de fonctionnement normal. Les éléments roulants 22 roulent le long des pistes de roulement. Les éléments roulants présentent un contact elliptique étroit par déformation élastique locale avec les pistes de roulement (Contact Hertzien). Les blocs intercalaires ne sont pas en contact simultané avec les deux pistes de roulement. Il subsiste un jeu dans la direction de contact, entre les pistes et les blocs intercalaires. Lorsque le palier est soumis à une charge importante ou à un choc violent, le palier est utilisé dans un mode de fonctionnement dit en surcharge. Les éléments roulants et les pistes de roulement se déforment en restant dans la limite de leur domaine d'élasticité. Lors de cette déformation, ils s'écrasent contre les pistes de roulement, qui elles même se déforment élastiquement autour du contact étroit. Le contact entre les éléments roulants et les pistes de roulement devient un contact elliptique plus large et plus creux. Le jeu 30 disposé entre les blocs intercalaires 24 et les pistes de roulement 26 est absorbé. Les faces d'appui 28, 29 des blocs intercalaires sont au contact des pistes de roulement. Comme les faces d'appui ont une forme complémentaire à la forme des pistes de roulement, la surface d'appui des blocs intercalaires sur les pistes de roulement est plus importante que celles entre éléments roulants et pistes de roulement. La pression par unité de surface est plus faible. Les blocs intercalaires sont en appui sur une plus grande surface des pistes de roulement. Les blocs intercalaires présentent une raideur supérieure aux éléments roulants. Ils présentent une plus grande résistance à la charge. Les pistes de roulement 26 ne sont que peu déformées sous les blocs intercalaires et ne sont au global, y compris sous les éléments roulants, déformées que dans leur domaine de déformation élastique.

Dans le mode de réalisation représenté, les éléments roulants 22 sont des billes. En variante, les éléments de roulants peuvent présenter une forme différente. Les éléments roulants peuvent par exemple être des rouleaux cylindriques, des rouleaux coniques ou en tonneaux.

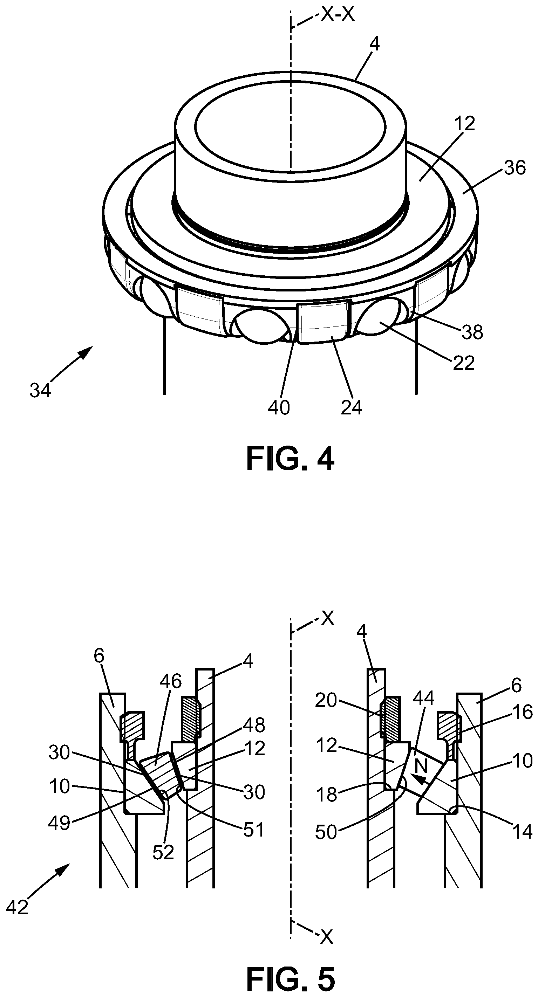

Un mode de fonctionnement est dit normal lorsque la charge appliquée est au moins trois à cinq fois inférieure à la charge d'un mode de fonctionnement en surcharge. Un mode de fonctionnement en surcharge peut conduire à un fluage ou à un Brinelling des bagues et/ou des éléments roulants. La charge seuil délimitant un mode de fonctionnement normal d'un mode de fonctionnement en surcharge dépend de la taille du palier et des matériaux utilisés pour le réaliser. L'Homme du métier est capable de définir cette charge seuil ainsi que le mode de fonctionnement normal et le mode de fonctionnement en surcharge à l'aide de ses connaissances techniques. La figure 4 représente un palier 34 selon un deuxième mode de réalisation comprenant les mêmes éléments que le palier 2 selon le premier mode de réalisation. En plus, le palier 34 comporte une cage de roulement 36 comprenant des premières alvéoles 38 et des deuxièmes alvéoles 40. Les premières alvéoles 38 ont une forme différente de la forme des deuxièmes alvéoles 40. Les premières alvéoles contiennent les éléments roulants 22. Les deuxièmes alvéoles 40 contiennent les blocs intercalaires 24. Les blocs intercalaires 24 peuvent être solidarisés de façon rigide ou souple ou libres dans un jeu défini aux deuxièmes alvéoles. Le palier 34 est monté autour d'un arbre 4. La bague externe 10 et le moyeu n'ont pas été représentés sur la figure 4.

Avantageusement, la cage de roulement 36 permet une meilleure séparation et une meilleure répartition angulaire des éléments roulants 22 et un meilleur positionnement des blocs intercalaires 24.

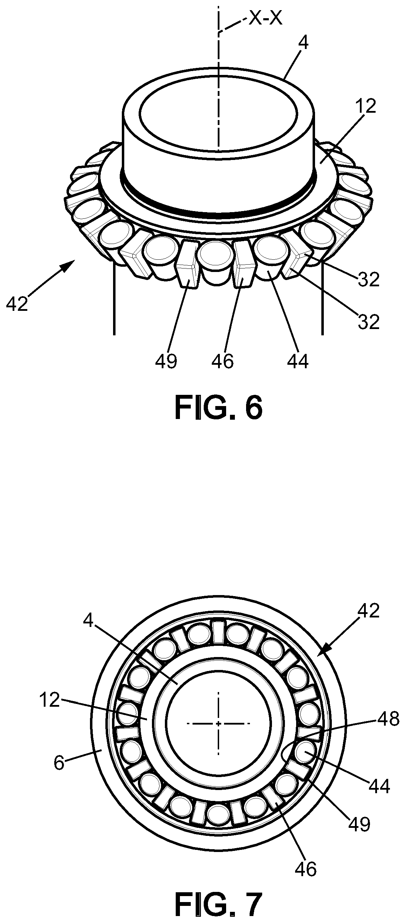

Les figures 5 à 7 représentent un palier 42 selon un troisième mode de réalisation comprenant des éléments techniques similaires aux éléments techniques du palier 2 selon le premier mode de réalisation. Les éléments techniques du troisième mode réalisation identiques aux éléments techniques du premier mode de réalisation sont désignés par les mêmes références et ne sont pas décrits une seconde fois. A la différence du palier 2 représenté sur les figures 1 à 3, les éléments roulants 44 du palier 42 présentent une forme de rouleaux coniques. Les blocs intercalaires 46 présentent la forme générale d'un prisme. Les faces d'appui 48, 49 des blocs intercalaires présentent une forme tronconique.

Les pistes de roulement 50 présentent également une forme tronconique. Dans le mode de réalisation représenté, les blocs intercalaires 46 présentent une dimension choisie de sorte que leurs faces d'appui 48 soient en regard de l'ensemble de la surface d'une portion 51 de piste de roulement de la bague interne 12 située en regard du bloc intercalaire

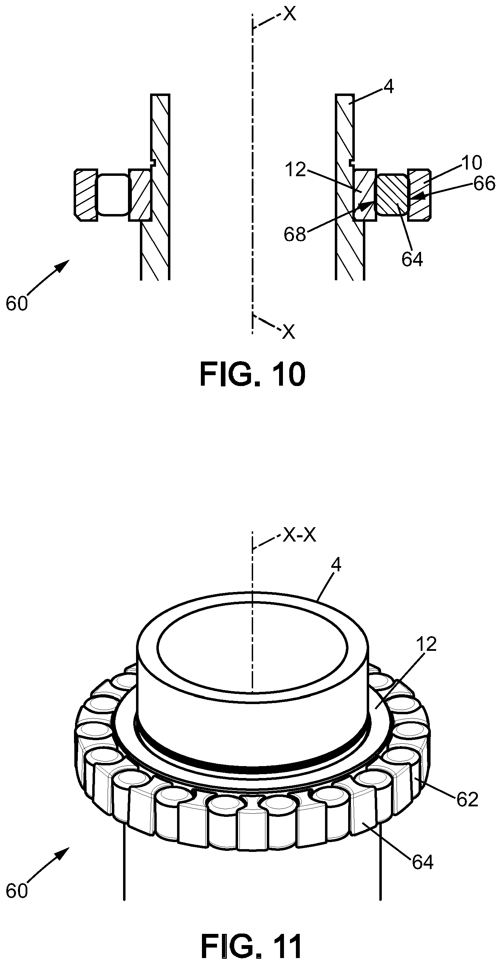

Les figures 10 à 13 représentent un palier 60 selon un quatrième mode de réalisation comprenant des éléments techniques similaires aux éléments techniques du palier 2 selon le premier mode de réalisation à l'exception du carter et des écrous de fixation. Les éléments techniques du quatrième mode réalisation identiques aux éléments techniques du premier mode de réalisation sont désignés par les mêmes références et ne sont pas décrits une seconde fois. A la différence du palier 2 représenté sur les figures 1 à 3, les éléments roulants 62 du palier 60 présentent une forme de rouleau cylindrique ou d'aiguille. Les blocs intercalaires 64 présentent la forme générale d'un prisme. Les faces d'appui 66, 68 des blocs intercalaires présentent une forme cylindrique.

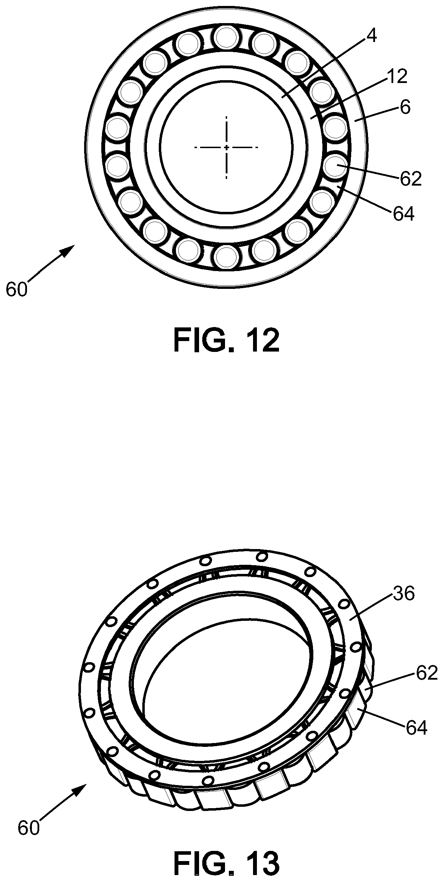

Dans le mode de réalisation illustré sur la figure 13, le palier 60 comporte en outre une cage de roulement 36.

L'invention concerne également un module de turbomachine comprenant un arbre rotatif d'axe longitudinal X-X ; un palier de roulement mécanique de guidage en rotation de l'arbre rotatif autour de l'axe longitudinal X-X ; ledit palier étant conformé comme mentionné ci-dessus.

L'invention concerne également une turbomachine comprenant un module de turbomachine conformé comme décrit ci-dessus. La turbomachine comprend un ensemble de pièces en rotation lente ou à orienter précisément selon un axe lui-même en rotation autour d'un axe d'arbre principal tournant rapidement. Les pièces en question subissant un champ d'accélération centrifuge et d'autres contraintes pouvant varier brutalement.

L'invention décrite peut-être appliquée :
- à des paliers à rouleaux à pistes cylindriques, coniques ou sphériques et toriques.
- à des butées à billes à pistes planes.
- à des glissières à rouleaux ou à billes.
- à des paliers à aiguilles.
- à un roulement à bille à 3 ou 4 points de contact.
- à des paliers à roulement présentant un jeu interne ou un serrage interne des éléments roulants.
- à des paliers dont les efforts extrêmes n'ont pas la même direction que les efforts en fonctionnement normal. Dans ce dernier cas, la forme des bagues et des blocs intercalaires est adaptée aux directions des efforts.

## Revendications

1. Palier (2, 34, 42, 60) de roulement mécanique comprenant :
- deux bagues (10, 12) présentant chacune une piste de roulement (26, 50),
- des éléments roulants (22, 44, 62) agencés entre les bagues, les éléments roulants étant aptes à rouler contre une partie des pistes de roulement, les éléments roulants étant réalisés dans un matériau défini,
- une pluralité de blocs intercalaires (24, 46) agencés entre les bagues (10, 12), les blocs intercalaires étant réalisés dans un matériau ayant une raideur supérieure à la raideur du matériau des éléments roulants (22, 44, 62) au moins dans des directions normales (N) aux pistes de roulement, et dans lequel, lorsque le palier est soumis à une charge inférieure à une charge seuil, les blocs intercalaires (24, 46) présentent une dimension inférieure aux éléments roulants (22, 44, 62) dans des directions normales aux pistes de roulement, les bagues (10, 12) ont une raideur supérieure aux éléments roulants (22, 44) **caractérisé en ce que** les blocs intercalaires (24, 46) comportent des faces d'appui (28, 29, 48, 49) situées en regard des pistes de roulement, lesdites faces d'appui des blocs intermédiaires ayant une forme complémentaire à la forme des pistes de roulement (26, 50)**.**

2. Palier (2, 34, 42, 60) selon la revendication 1, dans lequel les éléments roulants (22, 44, 62) sont fabriqués dans un matériau ayant une raideur suffisante pour autoriser la déformation des éléments roulants dans leur domaine de déformation élastique au moins jusqu'à ce que lesdits blocs intermédiaires (24, 46) soient en contact des pistes de roulement (26, 50), lorsque le palier est soumis à une charge supérieure à ladite charge seuil.

3. Palier (2, 34, 42, 60) selon l'une quelconque des revendications 1 et 2, dans lequel les blocs intercalaires (24, 46) présentent des arêtes arrondies (32).

4. Palier (2, 34, 42, 60) selon la revendication 3, dans lequel les arêtes arrondies (32) présentent une courbure à variation progressives formée par une succession de rayons fixes tangents ou une fonction continue dérivable.

5. Palier (2, 34, 42, 60) selon l'une quelconque des revendications 1 à 4, dans lequel les blocs intercalaires (24, 46) et les bagues (10,12) sont réalisés dans un matériau parmi la céramique et l'acier, et dans lequel les éléments roulants (22, 44) sont réalisés dans un alliage de Nickel -Titane.

6. Palier (2, 34, 42, 60) selon l'une quelconque des revendications 1 à 4, dans lequel les blocs intercalaires (24, 46) et les bagues (10, 12) sont réalisés en céramique et dans lequel les éléments roulants (22, 44, 62) sont réalisés en acier.

7. Palier (34, 60) selon l'une quelconque des revendications 1 à 6, qui comporte une cage de roulement (36) comprenant des premières alvéoles (38) et des deuxièmes alvéoles (40), les premières alvéoles ayant une forme différente de la forme des deuxièmes alvéoles, les premières alvéoles contenant les éléments roulants (22, 44, 60) et les deuxièmes alvéoles contenant les blocs intercalaires (24, 46).

8. Palier (34, 60) selon la revendication 7, dans lequel les blocs intercalaires (24, 46) sont solidarisés de façon rigide aux deuxièmes alvéoles (40).

9. Palier (34, 60) selon la revendication 7, dans lequel les blocs intercalaires (24, 46) sont montés libres dans les deuxièmes alvéoles (40), un jeu étant aménagé dans les deuxièmes alvéoles autour des blocs intercalaires.

10. Palier (34, 60) selon la revendication 7, dans lequel les blocs intercalaires (24, 46) sont solidarisés de façon souple aux deuxièmes alvéoles (40).

11. Palier (2) selon l'une quelconque des revendications 1 à 10, dans lequel les éléments roulants (22, 44) présentent une forme sphérique et dans lequel les blocs intercalaires (24, 46) présentent en coupe une forme de carré ou de losange dont les angles obtus sont arrondis ayant deux sommets opposés de forme arrondies, ladite coupe étant réalisée selon un plan radial.

12. Palier (42) selon l'une quelconque des revendications 1 à 10, dans lequel les éléments roulants (22, 44) présentent une forme de rouleau conique, et dans lequel les faces d'appui (48, 49) des blocs intercalaires présentent une forme tronconique.

13. Palier (60) selon l'une quelconque des revendications 1 à 10, dans lequel les éléments roulants (62) présentent une forme de rouleau cylindrique ou d'aiguille, et dans lequel les faces d'appui (66, 68) des blocs intercalaires présentent une forme cylindrique.

14. Palier selon l'une quelconque des revendications 1 à 10, dans lequel les éléments roulants présentent une forme de rouleau tonneau face à une piste extérieure en portion de sphère, et dans lequel les faces d'appui (48, 49) des blocs intercalaires présentent une forme en portion de tore face à la piste intérieure et en portion de sphère face à la piste extérieure.

## Patentansprüche

1. Mechanisches Wälzlager (2, 34, 42, 60), enthaltend:
- zwei Lagerringe (10, 12), die jeweils eine Laufbahn (26, 50) aufweisen,
- Wälzkörper (22, 44, 62), die zwischen den Lagerringen angeordnet sind, wobei die Wälzkörper an einem Teil der Laufbahnen abrollen können, wobei die Wälzkörper aus einem gegebenen Material hergestellt sind,
- eine Vielzahl von Zwischenblöcken (24, 46), die zwischen den Lagerringen (10, 12) angeordnet sind, wobei die Zwischenblöcke zumindest in den zu den Laufbahnen senkrechten Richtungen (N) aus einem Material hergestellt sind, dessen Steifigkeit höher ist als die Steifigkeit des Materials der Wälzkörper (22, 44, 62), wobei dann, wenn das Lager einer Belastung unterhalb einer Schwellenbelastung ausgesetzt ist, die Zwischenblöcke (24, 46) in den zu den Laufbahnen senkrechten Richtungen eine geringere Abmessung als die Wälzkörper (22, 44, 62) aufweisen, wobei die Lagerringe (10, 12) eine höhere Steifigkeit als die Wälzkörper (22, 44) aufweisen,
**dadurch gekennzeichnet, dass** die Zwischenblöcke (24, 46) den Laufbahnen gegenüberliegend angeordnete Auflageflächen (28, 29, 48, 49) aufweisen, wobei die Auflageflächen der Zwischenblöcke eine Form aufweisen, die zu der Form der Laufbahnen (26, 50) komplementär ausgebildet ist.

2. Lager (2, 34, 42, 60) nach Anspruch 1,
wobei die Wälzkörper (22, 44, 62) aus einem Material hergestellt sind, das eine ausreichende Steifigkeit aufweist, um eine Verformung der Wälzkörper in ihrem elastischen Verformungsbereich zumindest so lange zuzulassen, bis die Zwischenblöcke (24, 46) mit den Laufbahnen (26, 50) in Kontakt gelangen, wenn das Lager einer Belastung ausgesetzt ist, die über der Schwellenbelastung liegt.

3. Lager (2, 34, 42, 60) nach einem der Ansprüche 1 und 2,
wobei die Zwischenblöcke (24, 46) abgerundete Kanten (32) aufweisen.

4. Lager (2, 34, 42, 60) nach Anspruch 3,
wobei die abgerundeten Kanten (32) eine progressiv veränderliche Krümmung aufweisen, die aus einer Folge von festen Tangentialradien oder einer kontinuierlichen, ableitbaren Funktion gebildet ist.

5. Lager (2, 34, 42, 60) nach einem der Ansprüche 1 bis 4,
wobei die Zwischenblöcke (24, 46) und die Lagerringe (10, 12) aus einem Material, ausgewählt aus Keramik und Stahl, hergestellt sind und wobei die Wälzkörper (22, 44) aus einer Nickel-Titan-Legierung hergestellt sind.

6. Lager (2, 34, 42, 60) nach einem der Ansprüche 1 bis 4,
wobei die Zwischenblöcke (24, 46) und die Lagerringe (10, 12) aus Keramik hergestellt sind und wobei die Wälzkörper (22, 44, 62) aus Stahl hergestellt sind.

7. Lager (34, 60) nach einem der Ansprüche 1 bis 6,
umfassend einen Lagerkäfig (36) mit ersten Zellen (38) und zweiten Zellen (40), wobei die ersten Zellen eine andere Form als die zweiten Zellen haben, wobei die ersten Zellen die Wälzkörper (22, 44, 60) aufnehmen und die zweiten Zellen die Zwischenblöcke (24, 46) aufnehmen.

8. Lager (34, 60) nach Anspruch 7,
wobei die Zwischenblöcke (24, 46) starr mit den zweiten Zellen (40) verbunden sind.

9. Lager (34, 60) nach Anspruch 7,
wobei die Zwischenblöcke (24, 46) in den zweiten Zellen (40) frei gelagert sind, wobei in den zweiten Zellen um die Zwischenblöcke herum ein Spielraum vorgesehen ist.

10. Lager (34, 60) nach Anspruch 7,
wobei die Zwischenblöcke (24, 46) nachgiebig mit den zweiten Zellen (40) verbunden sind.

11. Lager (2) nach einem der Ansprüche 1 bis 10,
wobei die Wälzkörper (22, 44) eine kugelförmige Gestalt aufweisen und wobei die Zwischenblöcke (24, 46) im Schnitt eine quadratische oder rautenförmige Gestalt mit abgerundeten stumpfen Ecken und zwei gegenüberliegenden abgerundeten Scheitelpunkten aufweisen, wobei der Schnitt in einer radialen Ebene aufgenommen ist.

12. Lager (42) nach einem der Ansprüche 1 bis 10,
wobei die Wälzkörper (22, 44) eine Kegelrollenform aufweisen und wobei die Auflageflächen (48, 49) der Zwischenblöcke eine kegelstumpfförmige Gestalt aufweisen.

13. Lager (60) nach einem der Ansprüche 1 bis 10,
wobei die Wälzkörper (62) eine Zylinderrollen- oder Nadelform aufweisen und wobei die Auflageflächen (66, 68) der Zwischenblöcke eine Zylinderform aufweisen.

14. Lager nach einem der Ansprüche 1 bis 10,
wobei die Wälzkörper einer kugelabschnittförmigen Außenlaufbahn gegenüberliegend eine Tonnenrollenform aufweisen und wobei die Auflageflächen (48, 49) der Zwischenblöcke der Innenlaufbahn gegenüberliegend eine torusabschnittförmige Gestalt und der Außenlaufbahn gegenüberliegend eine kugelabschnittförmige Gestalt aufweisen.

## Claims

1. Mechanical roller bearing (2, 34, 42, 60) comprising:
- two bearing races (10, 12) each having a rolling track (26, 50),
- rolling elements (22, 44, 62) arranged between the races, the rolling elements being able to roll against a portion of the rolling tracks, the rolling elements being made of a defined material,
- a plurality of intermediate blocks (24, 46) arranged between the races (10, 12), the intermediate blocks being made of a material having a greater stiffness than the stiffness of the material of the rolling elements (22, 44, 62) at least in directions normal (N) to the rolling tracks, and in that, when the bearing is subjected to loading below a threshold load, the intermediate blocks (24, 46) have a smaller dimension than the rolling elements (22, 44, 62) in directions normal to the rolling tracks, the races (10, 12) having a greater stiffness than the rolling elements (22, 44), **characterized in that** the intermediate blocks (24, 46) comprise supporting faces (28, 29, 48, 49) located facing the rolling tracks, said supporting faces of the intermediate blocks having a shape complementary to the shape of the rolling tracks (26, 50).

2. Bearing (2, 34, 42, 60) according to claim 1, wherein the rolling elements (22, 44, 62) are manufactured of a material having sufficient stiffness to allow deformation of the rolling elements within their elastic deformation range at least until said intermediate blocks (24, 46) come in contact with the rolling tracks (26, 50), when the bearing is subjected to loading exceeding said threshold load.

3. Bearing (2, 34, 42, 60) according to any one of claims 1 and 2, wherein the intermediate blocks (24, 46) have rounded edges (32).

4. Bearing (2, 34, 42, 60) according to any one of the claims 1 to 4, wherein the rounded edges (32) have a progressively varying curvature formed by a succession of fixed tangential radii or a continuous differentiable function.

5. Bearing (2, 34, 42, 60) according to any one of claims 1 to 4, wherein the intermediate blocks (24, 46) and the races (10,12) are made of a material among ceramic and steel, and wherein the rolling elements (22, 44) are made of a nickel-titanium alloy.

6. Bearing (2, 34, 42, 60) according to any one of claims 1 to 4, wherein the intermediate blocks (24, 46) and the races (10, 12) are made of ceramic and wherein the rolling elements (22, 44, 62) are made of steel.

7. Bearing (34, 60) according to any one of claims 1 to 6, comprising a bearing cage (36) comprising first cells (38) and second cells (40), the first cells having a different shape than that of the second cells, the first cells containing the rolling elements (22, 44, 60) and the second cells containing the intermediate blocks (24, 46).

8. Bearing (34, 60) according to claim 7, wherein the intermediate blocks (24, 46) are rigidly secured to the second cells (40).

9. Bearing (34, 60) according to claim 7, wherein the intermediate blocks (24, 46) are mounted to move freely within the second cells (40), clearance being provided in the second cells around the intermediate blocks.

10. Bearing (34, 60) according to claim 7, wherein the intermediate blocks (24, 46) are flexibly secured to the second cells (40).

11. Bearing (2) according to any one of claims 1 to 10, wherein the rolling elements (22, 44) have a spherical shape and wherein the shape of the intermediate blocks (24, 46) in cross-section is a square or diamond in which the obtuse angles are rounded with two opposite vertices of rounded shape, said cross-section being along a radial plane.

12. Bearing (42) according to any one of claims 1 to 10, wherein the rolling elements (22, 44) have the shape of a tapered roller, and wherein the supporting faces (48, 49) of the intermediate blocks have a frustoconical shape.

13. Bearing (60) according to any one of claims 1 to 10, wherein the rolling elements (62) have the shape of a cylindrical roller or needle, and wherein the supporting faces (66, 68) of the intermediate blocks have a cylindrical shape.

14. Bearing according to any one of claims 1 to 10, wherein the rolling elements are rollers of barrel shape facing an outer track having the shape of a sphere portion, and wherein the supporting faces (48, 49) of the intermediate blocks have the shape of a torus portion facing the inner track and of a sphere portion facing the outer track.
